# EUROPÄISCHE PATENTSCHRIFT

(11) **EP 3 087 281 B1**
(45) Veröffentlichungstag und Bekanntmachung des Hinweises auf die Patenterteilung: **09.10.2019**
(21) Anmeldenummer: 14765857.9
(22) Anmeldetag: 20.08.2014
(51) Int. Cl.: F16C 23/04, F03D 13/00

(54) **PLANETENRADLAGERANORDNUNG**
PLANETARY GEAR BEARING ARRANGEMENT
ENSEMBLE PALIER DE SATELLITE

(30) Priorität: 21.10.2013 DE 102013221265
(43) Veröffentlichungstag der Anmeldung: 02.11.2016
(73) Patentinhaber: Schaeffler Technologies AG & Co. KG, 91074 Herzogenaurach (DE)
(72) Erfinder: GÜTTLER, Alexander, 91346 Wiesenttal (DE); PLOGMANN, Michael, 91074 Herzogenaurach (DE); FORSTNER, Christian, 4810 Gmunden (AT); CLAUS, Sven, 90431 Nürnberg (DE)
(86) Internationale Anmeldenummer: PCT/DE2014/200409
(87) Internationale Veröffentlichungsnummer: WO 2015/058749

(56) Entgegenhaltungen:
- EP-A1- 2 336 583
- EP-A1- 2 518 371
- CN-A- 103 185 132
- DD-A1- 66 534
- DD-A5- 289 318
- DE-B3- 10 318 945
- JP-A- 2001 165 151
- SU-A1- 1 090 941
- US-A- 5 102 379
- US-A1- 2012 051 915

## Beschreibung

### Gebiet der Erfindung

Die Erfindung betrifft eine Planetenradlageranordnung, umfassend einen Planetenradträger, an dem eine feste Lagerachse vorgesehen ist, auf welcher Lagerachse ein Planetenrad über ein Gleitlager, das eine achsseitig vorgesehene erste Gleitschicht und eine radseitig vorgesehene zweite Gleitschicht aufweist, drehgelagert ist.

### Hintergrund der Erfindung

DD289318A5 offenbart die Merkmale des Oberbegriffes des Anspruchs 1. Eine Planetenradlageranordnung kommt üblicherweise in einem Planetengetriebe zur Anwendung. Ein solches Planetengetriebe besteht üblicherweise aus zumindest einem Sonnenrad, einem Hohlrad und einem Planetenradträger, auf dem mindestens ein Planetenrad auf einer Lagerachse drehbar gelagert ist. Das Sonnenrad treibt beispielsweise das Planetenrad an, wobei zumeist mehrere, beispielsweise drei Planetenräder äquidistant verteilt sind, die gemeinsam über das Sonnenrad angetrieben werden. Das oder die Planetenräder kämmen mit dem Hohlrad, so dass die entsprechende Übersetzung gegeben ist.

Es ist bekannt, das Planetenrad über ein Gleitlager auf der Lagerachse drehzulagern. Üblicherweise kommen zur Lagerung Wälzlager zum Einsatz. Insbesondere bei großen Planetenradgetrieben ist auch der Einsatz eines hydrodynamischen Lagers bekannt, das über ein entsprechendes Schmiermittel, beispielsweise Öl, geschmiert wird. Bei hohen Lasten und bei niedrigen Relativgeschwindigkeiten bewegen sich die Reibpartner des Gleitlagers im sogenannten Mischreibungsbetrieb. Der rotierende Reibpartner wird hierbei nicht vollständig vom zwischenliegenden Schmierfilm getragen, vielmehr ist eine - zumindest teilweise - Oberflächenberührung zwischen dem rotierenden Reibpartner und dem Gegenlaufpartner gegeben.

Generell sollte der Reibpartner, der die Umfangslast trägt, also in der Regel die drehende Welle, eine höhere Härte, gegebenenfalls Oberflächenhärte aufweisen als der Gegenlaufpartner. Aufgrund dieser Ausgestaltung passt sich die Oberflächenkontur des Gegenlaufpartners der Kontur des in der Regel als Welle ausgestalteten Reibpartners an. Nach anfänglichem Einlaufverschleiß bewirkt diese Konturanpassung einen reduzierten Verschleiß durch Verringerung des Mischreibungsanteils bzw. Verschiebung des Mischreibungsgebietes zu kleineren Drehzahlen hin. Die Einlaufphase ist für Gleitlager, wie sie hierbei zum Einsatz kommen, zwingend erforderlich. Im hydrodynamischen Betrieb hingegen wird der eine Reibpartner des Gleitlagers vollständig vom Schmierfilm getragen. Er ist über diesen Schmierfilm vom Gegenlaufpartner getrennt. Der hydrodynamische Zustand ist, verglichen mit dem Mischreibungszustand, bei höheren Relativgeschwindigkeiten (Pressung konstant) oder geringeren Pressungen (Relativgeschwindigkeit konstant) gegeben.

Grundsätzlich wäre ein Betrieb im Mischreibungszustand zweckmäßig, da in diesem Bereich üblicherweise das Minimum der Stribeck-Kurve, die den Verlauf der Reibkraft bzw. des Reibkoeffizienten in Abhängigkeit der Reibgeschwindigkeit im Falle einer hydrodynamischen Reibung beschreibt, gegeben ist. Ausgehend vom Minimum der Stribeck-Kurve steigt bei höheren Reibgeschwindigkeiten, auch wenn zur Gleitreibung übergegangen wird, die Reibkraft wieder an aufgrund zunehmender Ausprägung der Flüssigkeitsreibung.

Zumeist ist die Verzahnung des Planetenrades und die mit ihr kämmende Hohlradverzahnung eine Schrägverzahnung. Aus diesem Grund wirkt auch eine axiale Last auf das Gleitlager, die ein Kippmoment induziert. Das heißt, dass es zu einer Kantenpressung im Gleitlagerbereich kommt, die verschleißfördernd ist. Dies gilt umso mehr, als üblicherweise bei bekannten Gleitlageranordnungen ein Reibpartner der Gleitlagerwerkstoffpaarung mit einer Oberflächenschicht aus Weißmetall oder Bronze versehen ist bzw. hieraus besteht, während der andere Reibpartner der Werkstoffpaarung eine Oberfläche aus ungehärtetem oder gehärtetem Stahl bzw. eine hart verchromte Oberfläche aufweist. Kommt es betriebsbedingt zu einer ungleichmäßigen Krafteinleitung und in Folge zu einem Kippmoment, so belastet dies insbesondere den Reibpartner bestehend aus Weißmetall oder Bronze, da er der weichere Reibpartner innerhalb der Materialpaarung ist und deshalb verschleißanfälliger ist. Wird das Planetengetriebe groß ausgelegt, was bei Getrieben, die im Bereich von Windkraftanlagen verwendet werden, in der Regel der Fall ist, so ergeben sich auch beachtliche Kippmomente, die verschleißfördernd sind. Insbesondere bei großen Planetengetrieben ist dies problematisch als sich ein verschlissenes Lagerbauteil nicht ohne weiteres bzw. wenn überhaupt nur mit sehr hohem Aufwand austauschen lässt.

### Zusammenfassung der Erfindung

Der Erfindung liegt somit das Problem zugrunde, eine Planetenradlageranordnung anzugeben, die im Vergleich zu bekannten Lageranordnungen verschleißfester ist.

Zur Lösung dieses Problems ist bei einer Planetenradlageranordnung der eingangs genannten Art erfindungsgemäß vorgesehen, dass eine der beiden Gleitschichten auf einer zur Reduzierung der Kantenpressung im Gleitbereich wenigstens abschnittsweise gewölbt profilierten Oberfläche erzeugt ist.

Das erfindungsgemäße Gleitlager zeichnet sich im Gleitbereich durch eine besondere gewölbt profilierte Oberfläche aus, auf welcher die eine der beiden Gleitschichten erzeugt respektive vorgesehen ist. Die Oberfläche ist abschnittsweise gewölbt profiliert, mithin also ausschließlich im Kantenbereich etwas zurückgenommen, so dass sich dort ein minimales Spiel ergibt, innerhalb welchem eine Verkippung der Reibpartner relativ zueinander möglich ist, ohne dass sich die Kantenpressung hierüber erhöht. Dies führt dazu, dass zum einen die Gleiteigenschaften erhalten bleiben, wenngleich sich die aktive Gleitfläche, innerhalb welcher der jeweilige Gleitzustand respektive die aktive Gleitführung gegeben ist, aufgrund der Kantenrücknahme etwas reduziert ist. Gleichzeitig ist aber auch bei ungleichmäßig eingeleiteten Axial- und/oder Radialkräften und damit gegebenem Kippmoment eine leichte Verkippung ohne Erhöhung der Kantenpressung oder sogar unter Reduzierung der Kartenpressung und damit ohne örtliche Erhöhung des Verschleißes möglich.

Verschleiß reduzierend wirkt sich insbesondere eine Weiterbildung der Erfindung aus, wonach eine der Gleitschichten, insbesondere die erste lagerachsseitig vorgesehene Gleitschicht, eine abgeschiedene Hartstoffschicht und die andere Gleitschicht, insbesondere die zweite, radseitige Gleitschicht eine gehärtete Oberflächenschicht ist. Denn üblicherweise ist bei bekannten Gleitlageranordnungen ein Reibpartner der Gleitlagerwerkstoffpaarung mit einer Oberflächenschicht aus Weißmetall oder Bronze versehen bzw. besteht hieraus, während der andere Reibpartner der Werkstoffpaarung eine Oberfläche aus ungehärtetem oder gehärtetem Stahl bzw. eine hart verchromte Oberfläche ist. Bei dieser Materialpaarung führt ein häufiger Betrieb des Gleitlagers im Mischreibungsgebiet aufgrund des hohen Oberflächenverschleißes am Reibpartner bestehend aus Weißmetall oder Bronze zu einer frühzeitigen Ausschöpfung des Verschleißvolumens, gegebenenfalls auch Schädigung und damit zu einem frühzeitigen Ausfall des Gleitlagers. Das Gebiet der eingangs beschriebenen Mischreibung wird insbesondere mit jedem Anlaufen und Auslaufen des Gleitlagers, aber auch durch häufig wechselnde, insbesondere kleine Drehzahlen und hohe Dynamik der Lagerlasten durchschritten. Wird also ein Planetengetriebe in Anwendungen eingesetzt, wo ein häufiger Lageranlauf gegeben ist, so sind entsprechende starke Lagerbelastungen gegeben, die Verschleiß fördernd sind. Erfindungsgemäß ist nun eine besondere Werkstoffpaarung im Gleitlagerbereich vorgesehen. Die erste Gleitschicht ist mittels einer abgeschiedenen Hartstoffschicht gebildet, die beispielsweise mittels PVD- oder PACVD-Verfahren aufgebracht ist. Bei dieser Hartstoffschicht kann es sich beispielsweise um eine diamantähnliche bzw. diamantartige Beschichtung handeln. Insbesondere ist sie als amorphe Kohlenstoffschicht, als sogenannte DLC-Schicht, ausgestaltet, oder als metalldotierte Kohlenstoffschichten. Alternativ zur Verwendung amorpher Kohlenstoffschichten kann die Hartstoffschicht auch durch Carbonitrieren hergestellt werden. Insbesondere geeignet ist eine harte diamantartige Beschichtung mit der Bezeichnung "Triondur®" der Anmelderin. Hierunter sind unterschiedliche Schichten, beispielsweise eine nitritische Chromschicht, eine wasserstofffreie amorphe Kohlenstoffschicht oder auf Kohlenstoff basierte Schichtsysteme bekannt, die sich jeweils durch extremen Verschleißwiderstand wie auch eine sehr gute Ölbenetzung auszeichnen.

Der zweite Werkstoff des erfindungsgemäß vorgeschlagenen tribologischen Systems ist eine gehärtete Oberflächenschicht. Diese wird bevorzugt durch entsprechende thermische Behandlung und gegebenenfalls Einbringung zusätzlicher, schichthärtender Elemente wie beispielsweise Kohlenstoff und Ähnliches in die üblicherweise als Wälzlagerstahl oder Einsatzstahl wie 18CrNiMo7-6 gebildete Oberflächenschicht des jeweiligen Gleitlagerreibpartners erzeugt. Es sind folglich im erfindungsgemäßen tribologischen System bestehend aus Hartstoffschicht und gehärteter Oberflächenschicht zwei extrem harte Reibpartner gegeben. Aufgrund der geringen Adhäsionsneigung der Hartstoffschicht im Kontakt mit der gehärteten Oberflächenschicht, also der gehärteten Stahlschicht, ist ein sehr geringer Reibbeiwert unter Ölschmierung gegeben. In dessen Folge entsteht beim Gleiten eine sehr geringe Reibarbeit und daraus resultierend eine geringere Wärmeentwicklung im Vergleich zu konventionellen hydrodynamisch ausgelegten Gleitlagersystemen auf Basis von Bronze- und Weißmetallwerkstoffen. Darüber hinaus zeichnet sich das erfindungsgemäß vorgeschlagene tribologische System durch einen äußerst hohen Verschleißschutz aus, da beide Partner innerhalb der Werkstoffpaarung extrem hart und damit verschleißfest sind. Hierdurch ergibt sich im Betrieb des Gleitlagers eine sehr hohe Mischreibungstauglichkeit, verbunden mit der Möglichkeit, den Betriebspunkt nahe an das Minimum der Stribeck-Kurve zu legen, wo also das optimale Verhältnis aus Rotationsgeschwindigkeit zur Reibkraft gegeben ist. Selbst höhere Anteile an Festkörperreibung können ohne Verschleiß aufgrund der Parameter der beteiligten Schichten ertragen werden.

Ein weiterer Vorteil ist, dass aufgrund der hohen Verschleißfestigkeit das klassische Einlaufen bei dem erfindungsgemäß in der Planetenradlageranordnung integrierten Gleitlager nicht mehr stattfindet. Das tribologische System läuft nicht ein, eine Einglättung von Rauheitsspitzen findet in wesentlich geringerem Maße statt. Hieraus resultiert eine bessere Führungsgenauigkeit, das Betriebsreibmoment steht hier von Beginn an bereit und verändert sich nicht anlagenwirksam. Unterstützt wird dies durch die bevorzugte Einstellung der Substratoberflächen mit Rauheiten Rz < 1, was insbesondere für die Hartstoffschicht, vorzugsweise aber auch für die gehärtete Oberflächenschicht gilt.

Wird folglich eine solche Werkstoffpaarung eingesetzt, so ergibt sich im normalen Lastbetrieb ein extrem verschleißfester Lauf. Sind ungleichmäßige Lasteinleitung oder Verkippungen von Planetenrad zu Planetenachse gegeben, so wirken auch diese sich nicht verschleißfördernd aus, da die gewölbt profilierte Oberfläche die Kantenpressung reduziert. Selbst wenn in diesem Fall Mischreibung gegeben ist, mithin also im Falle leichter Verkippung die Reibpartner aufeinanderlaufen, ergibt sich kein erhöhter Verschleiß, da die Werkstoffpaarung dem entgegenwirkt.

Die profilierte Oberfläche selbst kann unmittelbar an der Lagerachse, dort an einem im Durchmesser zum sonstigen Achsdurchmesser etwas größeren Lagerbund und/oder dem Planetenrad, dort an seiner Bohrungsinnenseite, ausgebildet sein. Alternativ kann die profilierte Oberfläche auch an einer achs- oder radseitig angeordneten Hülse, die die Gleitschicht trägt, ausgebildet sein.

Dabei können zwei oder mehr axial hintereinander angeordnete Hülsen vorgesehen sein, die zur Bildung eines oder mehrerer Schmiermittelaufnahmeräume voneinander beabstandet sind und/oder jeweils einen in der Wandstärke reduzierten Abschnitt aufweisen. Bei dieser Erfindungsausgestaltung ist das Gleitlager an zumindest einer Lagerhälfte zwei- oder mehrteilig, es wird über zwei oder mehrere axial hintereinander angeordnete Hülsen realisiert. Dies ist dahingehend von Vorteil als im Falle einer etwaigen Verbiegung der Lagerachse oder des Planetenrades nicht das komplette Gleitlager respektive die entsprechende Gleitschicht sich verbiegt, sondern durch die Hülsenaufteilung die Biegebeanspruchung abgefedert wird. Ein weiterer Vorteil ist die Bildung von Schmiermittelaufnahmeräumen im Gleitbereich. Dies ermöglicht es, in gerade diesem Bereich entsprechende Schmiermittelreservoirs vorzusehen und das Gleitlager stets gut schmieren zu können. Dabei ist ein besonderer Vorteil insbesondere der zuvor beschriebenen Werkstoffpaarung Hartstoffschicht / gehärtete Oberflächenschicht, dass eine deutlich geringere Wärmeentwicklung gegeben ist, verglichen mit bisherigen Systemen, was einen wesentlich geringeren Kühlaufwand mit sich bringt. Das Schmiermittel, also das Öl, im Reibkontakt wird nur noch zur Benetzung benötigt, nicht aber zum Kühlen. Infolgedessen sind die benötigten Schmiermittelmengen deutlich geringer, eine aktive Schmiermittelversorgung durch Druckschmierung oder ähnliches ist nicht mehr erforderlich. Eine Schmierung der Gleitkontakte allein durch Tauchen der Planetenradlagerachse mit dem Gleitlager und Planetenrad in das Tauchbad, also den Ölsumpf des Getriebes, ist bereits ausreichend. Hierüber ist ein hinreichender Zulauf gegeben. Mit dem Wegfall der aktiven Schmiermittelversorgung sinkt des Weiteren auch die Störanfälligkeit im Planetengetriebe, die Betriebssicherheit und Anlagenverfügbarkeit steigt. Wird nun durch entsprechende Anordnung mehrerer Hülsen unmittelbar im Gleitbereich ein oder werden mehrere Schmiermittelaufnahmeräume realisiert, so ist für eine sichere Gleitlagerschmierung Sorge getragen. Diese ist natürlich auch gegeben, wenn nur eine einzelne Hülse vorgesehen ist, denn wie beschrieben ist insbesondere bei Verwendung der beschriebenen Werkstoffpaarung eine geringe Wärmeentwicklung gegeben. Kommt diese jedoch nicht zum Einsatz und wird auf bekannte Werkstoffpaarungen zurückgegriffen, so kann eine aktive Schmiermittelversorgung selbstverständlich vorgesehen werden.

Bei Anordnung mehrer Hülsen an der Lagerachse kann die Lagerachse eine Axialbohrung und eine in diese geführte Radialbohrung, die in einem Schmiermittelaufnahmeraum mündet, aufweisen. Hierüber kann ein Schmiermittelzufluss nicht nur stirnseitig in den Lagerbereich erfolgen, sondern auch quasi über die Lagerachse selbst, wobei auch dieser Zufluss entweder über eine aktive Schmiermittelversorgung realisiert werden kann, oder allein durch das Durchlaufen des Schmiermittelsumpfes.

Um das Planetenrad zur Aufnahme z. B .aus der Verzahnung resultierender Axialkräfte auch axial abzustützen, kann wenigstens ein Axialgleitlager vorgesehen sein, über das das Planetenrad gegen den Planetenradträger gelagert ist, wobei das Axiallager mindestens eine Axialscheibe umfasst, die entweder mit dem Planetenrad verbunden ist und auf dem Planetenradträger läuft, oder die mit dem Planetenradträger verbunden ist und auf dem Planetenrad läuft, und die an ihrer zum Planetenradträger oder zum Planetenrad weisenden Seite eine zumindest abschnittsweise gewölbt profilierte Oberfläche aufweist. Auch dieses Axialgleitlager ist erfindungsgemäß mit einer gewölbt profilierten Oberfläche versehen, die derart ausgeführt ist und positioniert ist, dass im Falle einer geringen Verkippung des Planetenrades relativ zur Lagerachse auch in diesem Gleitlagerbereich keine erhöhte und verschleißfördernde Kantenpressung gegeben ist. Denn wenn das Planetenrad minimal verkippt, so ist auch im Axialgleitlager ein gewisses Kippmoment gegeben. Dieses wird jedoch über die entsprechende Oberflächenprofilierung kompensiert, das heißt, dass auch im Axialgleitlagerbereich keine übermäßige Kantenpressung, die verschleißfördernd wäre, gegeben ist.

Besonders vorteilhaft ist hier, wenn auch die Axialscheibe eine Gleitschicht in Form einer abgeschiedenen Hartstoffschicht aufweist, die auf einer am Planetenradträger oder am Planetenrad ausgebildeten Gleitschicht in Form einer gehärteten Oberflächenschicht läuft. Das heißt, dass auch axiallagerseitig die entsprechende, erfindungsgemäß vorteilhafte Werkstoffpaarung Hartstoffschicht / gehärtete Oberflächenschicht vorgesehen ist, die verschleißfest ist. In Kombination mit der erfindungsgemäßen Kantenrückname über die gewölbte Oberfläche ergibt sich folglich auch im Axialgleitlagerbereich eine extreme Verschleißfestigkeit, sei es im Bezug auf den normalen Gleitbetrieb, sei es im Bezug auf den Abbau übermäßiger Kantenpressungen.

Die gewölbt profilierte Oberfläche kann eine homogene Wölbung aufweisen, also eine Wölbung mit konstantem Radius, der natürlich sehr groß ist. Alternativ dazu kann die Wölbung auch einen logarithmischen Verlauf aufweisen, das heißt, dass primär im Bereich der Oberflächenkante, also in den Randbereichen des Gleitlagers eine Rücknahme gegeben ist, während der dazwischen befindliche Bereich nahezu vollständig zylindrisch ist. Dieser zylindrische Bereich sollte sich über wenigstens der Hälfte, vorzugsweise über wenigstens zwei Drittel der Länge gegeben sein, so dass letztlich nur im Kantenbereich eine stärkere Durchmesserrücknahme gegeben ist.

Die Hartstoffschicht sollte eine Härte von wenigstens 800 HV, insbesondere von mindestens 1000 HV bis zu 4000 HV und vorzugsweise von 1100 HV bis 3000 HV aufweisen, während die gehärtete Oberflächenschicht eine Härte von wenigstens 45 HRC erzielt, insbesondere mindestens 53 HRC und vorzugsweise von 55 HRC bis zu 65 HRC aufweisen sollte. Die Hartstoffschicht sollte dabei eine Oberflächenrauhigkeit Rz und von weniger als 1,5, insbesondere von wenigstens 1 aufweisen. Auch die Oberflächenrauhigkeit der zugeordneten gehärteten Oberflächenschicht liegt vorzugsweise unter Rz = 2, vorzugsweise unter Rz = 1. Die Schichtdicke der Hartstoffschicht sollte vorzugsweise < 20 µm sein, bevorzugt liegt sie im Bereich von 1 - 10 µm. Die Dicke der gehärteten Oberflächenschicht sollte, nachdem diese etwas weicher ist als die Hartstoffschicht und folglich etwas stärker beansprucht wird, mindestens ebenso dick, wenn nicht sogar dicker sein.

Neben der Planetenradlageranordnung selbst betrifft die Erfindung ferner ein Planetengetriebe, umfassend eine Planetenradlageranordnung der beschriebenen Art. Sofern planetengetriebeseitig mehrere Planetenräder vorgesehen sind, so sind diese selbstverständlich in entsprechender Anordnung an einem gemeinsamen Planetenradträger oder - sofern zwei scheibenförmige Planetenradträger vorgesehen sind - an diesen an entsprechenden Lagerachsen vorgesehen. Jede dieser Lageranordnungen ist in der erfindungsgemäßen Weise konzipiert respektive aufgebaut, sowohl geometrisch als auch tribologisch. Gleiches gilt für die jeweiligen separaten Axiallagerungen der einzelnen Planetenräder.

### Kurze Beschreibung der Zeichnung

Ein Ausführungsbeispiel der Erfindung ist in der Zeichnung dargestellt und wird im Folgenden näher beschrieben. Es zeigen:
- Figur 1: eine Prinzipdarstellung eines erfindungsgemäßen Planetengetriebes,
- Figur 2: ein Planetenrad nebst Lagerachse,
- Figur 3: eine Schnittansicht durch die Lageranordnung nach Figur 2,
- Figur 4: eine vergrößerte Schnittansicht durch eine auf der Lagerachse befestigten Hülse mit profilierter Oberfläche,
- Figur 5: eine vergrößerte Detailansicht des Bereichs V aus Figur 3,
- Figur 6: eine vergrößerte Schnittansicht durch eine auf der Lagerachse befestigte Hülse einer zweiten Ausführungsform,
- Figur 7: eine Schnittansicht durch eine Axiallagerscheibe,
- Figur 8: eine vergrößerte Schnittansicht des Bereichs VIII aus Figur 3,
- Figur 9: eine Schnittansicht durch ein Planetenrad mit gewölbten Stirnflächen,
- Figur 10: eine vergrößerte Ansicht des Bereichs X aus Figur 9,
- Figur 11: eine Schnittansicht einer Lageranordnung einer zweiten Ausführungsform,
- Figur 12: eine Schnittansicht einer Lageranordnung einer dritten Ausführungsform,
- Figur 13: eine Lageranordnung einer vierten Ausführungsform.

### Ausführliche Beschreibung der Zeichnung

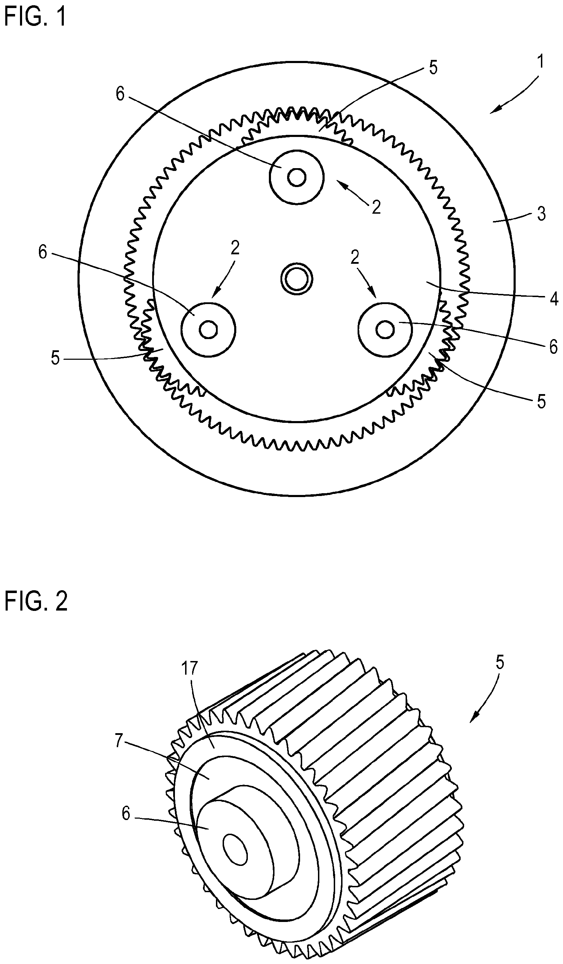

Figur 1 zeigt ein erfindungsgemäßes Planetenradgetriebe 1 mit insgesamt drei erfindungsgemäßen Planetenradlageranordnungen 2. Das Planetenradgetriebe 1 umfasst ein Hohlrad 3 mit einer Innenverzahnung sowie einem Planetenradträger 4 mit drei daran drehgelagerten Planetenrädern 5, die mit ihren Außenverzahnungen in bekannter Weise mit dem Hohlrad 3 kämmen. Jedes Planetenrad 5 ist an einer fest mit dem Planetenradträger 4 verbundenen Lagerachse 6 in der erfindungsgemäßen Weise gelagert. Angetrieben wird das Planetengetriebe über ein nicht näher gezeigtes, mit den Planetenrädern 5 kämmendes Sonnenrad.

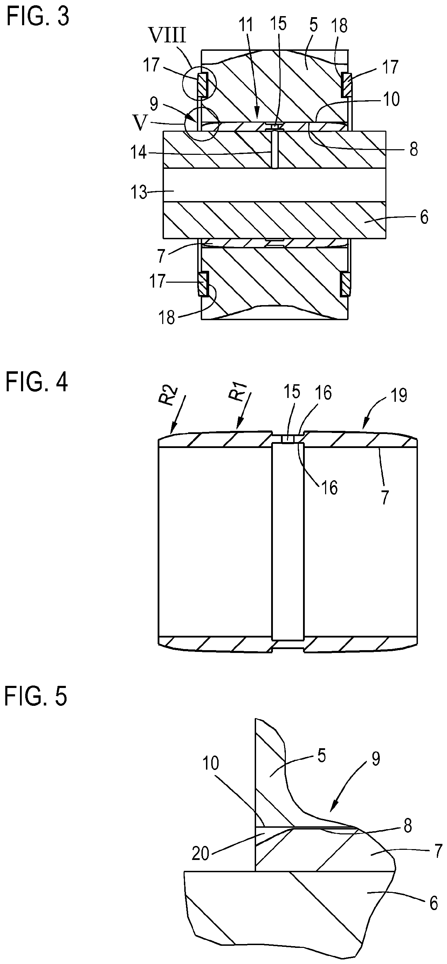

Die Figuren 2 und 3 zeigen eine erste Ausführungsform einer Planetenradlagerung. Figur 2 zeigt das Planetenrad 5 sowie die Lagerachse 6, die in an sich bekannter Weise am aus Figur 1 bekannten Planetenradträger 4 befestigt ist. Auf der Lagerachse 6 ist eine Hülse 7 befestigt. Die Hülse 7 weist an ihrer Außenseite eine erste Gleitschicht auf, beispielsweise in Form einer darauf abgeschiedenen Hartstoffschicht 8, beispielsweise eine unter dem Namen "Triondur®" bekannte Schicht der Anmelderin. Diese Schicht, die beispielsweise mittels PVD- oder PACVD-Verfahren abgeschieden wird, weist eine Härte von wenigstens 800 HV, insbesondere von mindestens 1000 HV bis zu 4000 HV, vorzugsweise von 1100 HV bis 3000 HV auf. Sie gilt als der eine Reibpartner eines Gleitlagers 9. Der andere Reibpartner ist die an der Innenfläche der Bohrung 10 des Planetenrads 5 erzeugte zweite Gleitschicht in Form einer gehärteten Oberflächenschicht 11, die durch an sich bekannte Härteverfahren hergestellt wird. Die gehärtete Oberflächenschicht weist eine Härte von wenigstens 45 HRC auf, vorzugsweise von mindestens 53 HRC, insbesondere von mindestens 55 HRC bis zu 65 HRC. Das Gleitlager 9 wird hier also über die Hülse 7 mit ihrer ersten Gleitschicht in Form der Hartstoffschicht 8 sowie das Planetenrad 5 mit seiner zweiten Gleitschicht in Form der gehärteten Oberflächenschicht 11 gebildet. Da beide Reibpartner respektive Gleitschichten extrem hart sind, kommt es zu vernachlässigbarem Verschleiß, verglichen mit bisher bekannten Gleitlagersystemen im Bereich der Planetenradlagerung. Das Planetenrad 5 selbst ist zum Beispiel aus Wälzlagerstahl, der sich in bekannter Weise extrem gut härten lässt. Die Hülse 7 kann ebenfalls zum Beispiel aus Wälzlagerstahl sein. Wichtig ist jedoch wie hier beschrieben die aufgebrachte Hartstoffschicht. An dieser Stelle ist jedoch festzuhalten, dass auch andere Schichtsysteme gewählt werden können, als die zuvor beschriebenen.

Wird insbesondere das zuvor beschriebene Schichtsystem verwendet, so ist keine aktive Schmierung des Gleitlagers 9, also des Gleitbereich erforderlich. Vielmehr ist der Ölzufluss ausreichend, der gegeben ist, wenn das Planetenrad 5 samt Lagerachse 6 bei einer Drehung des Planetenradträgers 4 durch einen Ölsumpf läuft, hierüber wird hinreichend Schmiermittel geschöpft, das der Gleitschmierung dient.

Um die Schmierung zu verbessern besteht die Möglichkeit, über eine zentrale Bohrung 13 der Lagerachse 6 und eine radial dazu verlaufende Bohrung 14 von innen her Schmiermittel zuzuführen. Die Bohrung 14 setzt sich über eine Bohrung 15 in der Hülse 7 fort, wobei der Bohrung 15 vor- und nachgeschaltet Erweiterungen 16, die Schmiermittelreservoire bilden, zugeordnet sind. Da sich auch im Bereich der Bohrung 13 Schmiermittel ansammeln kann, kann auch hierüber eine entsprechende Zufuhr zum Gleitlager 9 erfolgen, wenngleich dies nicht zwingend ist.

Des Weiteren sind am Planetenrad 5 beidseits zwei Axiallagerscheiben 17 in entsprechenden, stirnseitig am Planetenrad 5 eingebrachten Aufnahmen 18 vorgesehen. Über diese Axialscheiben 17 stützt sich das Planetenrad 5 beispielsweise am jeweiligen Planetenradträger 4, der bei dieser Ausgestaltung jeweils an einer Radseite vorgesehen ist, ab, wobei die beiden Planetenradträger 4 über die Lagerachse 6 verbunden sind. Es ist also ein axial abstützendes Axialgleitlager realisiert. Auch an diesem Axialgleitlager kann das gleiche Gleitschichtsystem wie im Bereich des Gleitlagers 9 realisiert sein, muss aber nicht. Bevorzugt weist die Axialscheibe 17 eine entsprechende Hartstoffschicht auf, wobei hier der gleiche Hartstoff wie zur Bildung der Hartstoffschicht 8 verwendet werden kann. Die entsprechende Gegenlagerfläche am Planetenradträger 4 ist ebenfalls eine gehärtete Oberflächenschicht, der Planetenradträger 4 kann ebenfalls zum Beispiel aus Wälzlagerstahl oder dergleichen bestehen, so dass seine großflächige Härtung ebenfalls ohne Weiteres möglich ist. Das heißt, dass sich auch im Bereich dieser Axiallagerung entsprechende Gleitverhältnisse einstellen, die einer sehr geringen Schmierung bedürfen. Wiederum ist hier der reine Durchlauf durch das Ölbad ausreichend, die Schmiermittelversorgung sicherzustellen.

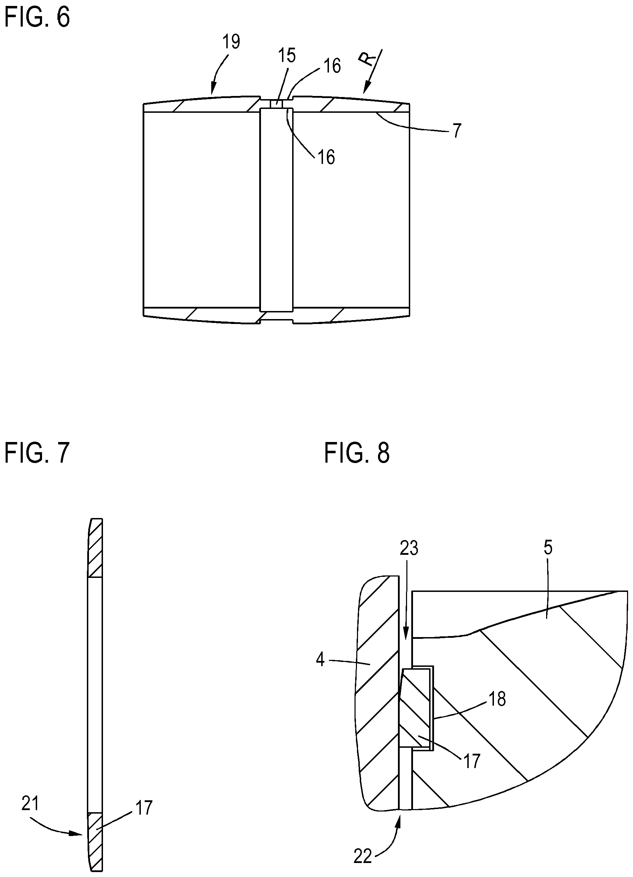

Wesentlich bei der erfindungsgemäßen Planetenradlageranordnung ist, dass Vorkehrungen getroffen sind, eine etwaige Kantenpressung im Falle einer auf das Planetenrad 5 wirkenden Axiallast und damit einem gegebenen Kippmoment zu verringern oder zu vermeiden. Eine solche Last tritt insbesondere deshalb auf, da das Planetenrad eine Schrägverzahnung aufweist, die mit einer entsprechenden Schrägverzahnung am Hohlrad 3 kämmt. Um eine solche Kantenpressung zu vermeiden ist im gezeigten Beispiel, siehe Figur 4, die Oberfläche 19 der Hülse 7, die die Hartstoffschicht 8 trägt, profiliert. Ersichtlich nimmt die Wandstärke insbesondere im Randbereich ab. Die Profilierung ist hier logarithmisch, das heißt, dass die gewölbte Oberfläche im gezeigten Beispiel zwei unterschiedlich große Radien R1 und R2 aufweist. Alternativ ist, siehe die in Figur 6 gezeigte Hülse 7, auch eine homogene Wölbung mit einem einheitlichen Radius R verwendbar.

Figur 5 zeigt eine vergrößerte Detailansicht der Planetenradlageranordnung aus Figur 3 im Bereich V. Es sei angenommen, dass die in Figur 3 gezeigte Hülse der Hülse gemäß Figur 4 entspricht. Ersichtlich ergibt sich folglich insbesondere im Randbereich ein von innen nach außen leicht zunehmender, umlaufender Spalt 20, der hier zu Darstellungszwecken übertrieben groß gezeichnet ist. Die abfallende Oberfläche der Hülse 7 und die zylindrische Mantelfläche 10 des Planetenrads 5 liegen einander gegenüber. Würde nun das Planetenrad 5 axial belastet etwas verkippen, so würde es trotz allem nicht zu einer zunehmenden Flächenpressung kommen, da die beiden Kanten hinreichend weit voneinander beabstandet sind.

Würde das Planetenrad 5 verkippen, so würden auch die beiden Axialscheiben 17 entsprechend verkippt werden. Liegen diese leitend an dem Planetenradträger 4 an, so würde auch dort eine erhöhte Kantenpressung gegeben sein. Um auch hier eine entsprechende verschleißfördernde hohe Kantenpressung zu vermeiden, sind, siehe Figur 7, auch an jeder Axialscheibe 17 entsprechende Vorkehrungen getroffen. Auch dort ist die Oberfläche 21, die beispielsweise die Hartstoffschicht trägt, profiliert, beispielsweise in ebenfalls logarithmischer Form, entsprechend der Ausgestaltung an der Hülse 4, oder mit homogener Wölbung. Ersichtlich nimmt also auch dort die Scheibendicke zum Rand hin ab.

Figur 8 zeigt eine vergrößerte Detailansicht des Bereichs VIII, die die verbaute Axialscheibe 7 zeigt. Diese liegt, ein Axialgleitlager 22 bildend, an dem Planetenradträger 4 an, der beispielsweise eine gehärtete Oberflächenschicht aufweist. Ersichtlich jedoch ergibt sich auch hier ein sich nach außen öffnender umlaufender Spalt 23, der auch hier übertrieben groß gezeichnet ist. Würde nun das Planetenrad 5 verkippen, so würde zwar auch die Axialscheibe 17 verkippen, jedoch liegt ihre Kante nicht am Planetenradträger 4 an. Eine erhöhte, verschleißfördernde Kantenpressung ist dann folglich auch hier nicht gegeben.

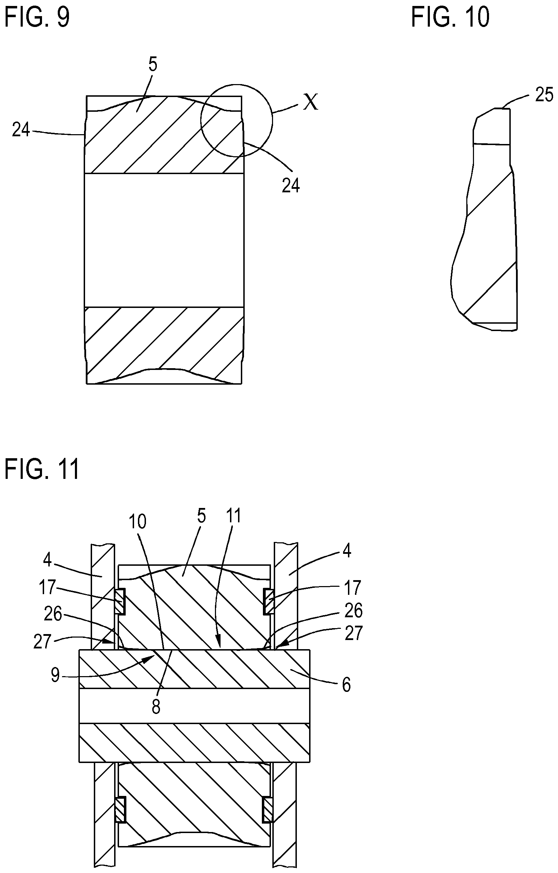

Während die zuvor beschriebene Ausführungsform ein Axiallager 22 zeigt, bei dem eine Axialscheibe 17 mit Oberflächenprofilierung verbaut ist, besteht die Möglichkeit, auf eine solche Axialscheibe 17 zu verzichten und das Planetenrad 5 selbst entsprechend als Gleitlagerelement zu nutzen. Zu diesem Zweck kann die jeweilige Stirnfläche des Planetenrades 5 eine entsprechende Gleitschicht, beispielsweise die bereits beschriebene Hartstoffschicht, aufweisen. Zur Vermeidung einer Kantenpressung im Falle eines Verkippens ist dort die jeweilige Stirnfläche 24 entsprechend profiliert, wie die Figuren 9 und 10 zeigen. Ersichtlich ist die jeweilige Stirnfläche 24 im radial außen liegenden Bereich zurückgenommen, auch hier kann ein logarithmisches Profil oder eine Wölbung mit gleichbleibendem Radius vorgesehen sein. Kommt es zu einer geringen Verkippung, so stellt sich auch hier keine erhöhte Kantenpressung ein. Der Bereich des Außengewindes 25 ist ebenfalls leicht zurückversetzt, da im Falle eines Verkippens natürlich sichergestellt sein muss, dass das Außengewinde 25 nicht am Planetenradträger 4 anliegt.

Figur 11 zeigt eine Ausgestaltung einer Planetenradlageranordnung, bei der ohne Zwischenschaltung einer Hülse das Planetenrad 5 auf der Lagerachse 6 über ein Gleitlager 9 gelagert ist. Wiederum sei angenommen, dass die Lagerachse 6 die Hartstoffschicht trägt, während das Planetenrad innenseitig mit einer gehärteten Oberflächenschicht 11 versehen ist.

Gezeigt sind ferner zwei separate Planetenradträger 4, die über die Lagerachse 6 verbunden sind.

Bei dieser Ausgestaltung ist zur Vermeidung einer erhöhten Kantenpressung die Innenmantelfläche 10 der Planetenradbohrung entsprechend profiliert. Es kann eine logarithmische oder einen konstanten Radius aufweisende Wölbung gegeben sein. Ersichtlich sind, wie übertrieben dargestellt, die beiden Kanten 26 zurückgenommen, so dass sich ein jeweiliger, schmaler Spalt 27 ergibt, der eine Verkippung des Planetenrads 5 ohne Kantenpressung ermöglicht.

Auch die hier gezeigten beiden Axialscheiben 17 sind in entsprechender Weise wie zur vorstehenden Ausführungsform beschrieben, ausgestaltet.

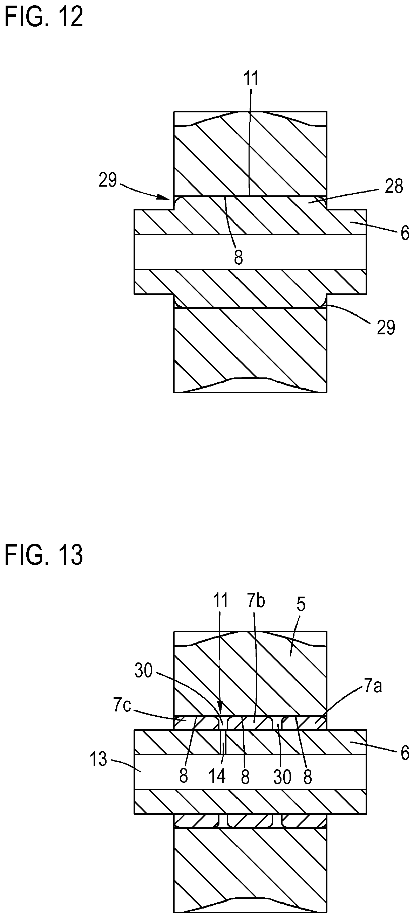

Figur 12 zeigt eine weitere Ausführungsform einer Planetenradlageranordnung, wobei hier der Einfachheit halber lediglich das Planetenrad 5 und die Lagerachse 6 gezeigt sind. Selbstverständlich sind auch hier ein oder zwei Planetenradträger vorgesehen sowie entsprechende Axiallagerscheiben 17 etc.

Die Lagerachse 6 weist bei dieser Ausgestaltung einen radialen Lagerbund 28 auf, der beispielsweise die Hartstoffschicht 8 trägt. Seine Oberfläche ist wiederum profiliert, nämlich wie die Oberfläche 19 der jeweiligen Hülse gemäß Figuren 4 und 6, also entweder logarithmisch oder mit homogenem Radius. Dies führt dazu, dass die beiden Kanten 29 wiederum deutlich zurückgenommen sind, so dass sich ein entsprechender Spalt bildet. Verkippt das die gehärtete Oberflächenschicht 11 aufweisende Planetenrad 5, ist auch hier eine erhöhte Kantenpressung vermieden.

Figur 13 zeigt schließlich eine weitere Ausführungsform, bei der das Planetenrad 5 - wie auch bei der zuvor beschriebenen Ausführungsform - unverformt ist, also eine zylindrische Innenmantelfläche aufweist, die die gehärtete Oberflächensicht 11 aufweist. Anstelle einer einzelnen Hülse sind hier drei separate Hülsen 7a, 7b und 7c vorgesehen. Jede dieser Hülsen 7a, 7b, 7c weist exemplarisch eine Hartstoffschicht 8 auf. Jede der einzelnen Hülsen 7a, 7b, 7c weist eine entsprechend profilierte Oberfläche auf, so dass auch dort die jeweiligen Kanten zurückgenommen sind. Die Hülsen 7a, 7b, 7c sind zueinander beabstandet angeordnet, so dass sich zwischen jeweils zwei Hülsen ein Schmiermittelaufnahmeraum 30 ausbildet. Die radiale Bohrung 14, die in der Bohrung 13 der Lagerachse 6 mündet, mündet in einem dieser Schmiermittelaufnahmeräume 30, um von innen her Schmiermittel zuzuführen. Eine solche zusätzliche Radialbohrung kann selbstverständlich auch bei den Ausführungsformen nach den Figuren 11 und 12 vorgesehen sein.

Das Planetenrad 5 kann aus Wälzlagerstahl oder Einsatzstahl, zum Beispiel 18CrNiMo7-6 bestehen. Die jeweilige Hülse, die das Substrat für die gegebenenfalls verwendete Hartstoffschicht bildet, oder die gehärtet wird, kann ebenfalls aus Wälzlagerstahl oder thermochemisch behandeltem Einsatzstahl (z. B. 16MnCr5) bestehen, aber auch Vergütungsstahl (z. B. 42CrMo4), durchhärtender Stahl (z. B. 100Cr6) oder Nitrierstahl können verwendet werden. Die Lagerachse kann aus beliebigem, hinreichend gehärtetem Stahl bestehen, wie auch der Planetenradträger, der aber auch aus Gusswerkstoffen wie GG70, GG50 oder GG40 gefertigt sein kann.

### Bezugszahlenliste

- 1: Planetenradgetriebe
- 2: Planetenradlageranordnung
- 3: Hohlrad
- 4: Planetenradträger
- 5: Planetenrad
- 6: Lagerachse
- 7: Hülse
- 8: Hartstoffschicht
- 9: Gleitlager
- 10: Innenfläche der Bohrung
- 11: Gehärtete Oberflächenschicht
- 12: -
- 13: Zentrale Bohrung
- 14: Radiale Bohrung
- 15: Bohrung in Hülse
- 16: Erweiterung
- 17: Axiallagerscheibe
- 18: Aufnahme
- 19: Oberfläche der Hülse
- 20: Spalt
- 21: Oberfläche der Axialscheibe
- 22: Axialgleitlager
- 23: Spalt
- 24: Stirnfläche
- 25: Außengewinde
- 26: Kante
- 27: Spalt
- 28: Lagerbunde
- 29: Kante
- 30: Schmiermittelaufnahmeraum

## Patentansprüche

1. Planetenradlageranordnung, umfassend einen Planetenradträger, an dem eine feste Lagerachse vorgesehen ist, auf der ein Planetenrad über ein Gleitlager mit einer achsseitig vorgesehenen ersten Gleitschicht und einer radseitig vorgesehenen zweiten Gleitschicht drehgelagert ist, **dadurch gekennzeichnet, dass** eine der beiden Gleitschichten (8, 11) auf einer ausschließlich in den Kantenbereichen eines Gleitbereichs gewölbt profilierten Oberfläche (10, 19) erzeugt ist.

2. Planetenradlageranordnung nach Anspruch 1, **dadurch gekennzeichnet, dass** eine der Gleitschichten eine abgeschiedene Hartstoffschicht (8) und die andere Gleitschicht eine gehärtete Oberflächenschicht (11) ist.

3. Planetenradlageranordnung nach einem der vorangehende Ansprüche, **dadurch gekennzeichnet, dass** die profilierte Oberfläche unmittelbar an der Lagerachse (6) oder dem Planetenrad (5) ausgebildet ist, oder an wenigstens einer achs- oder radseitig angeordneten Hülse (7).

4. Planetenradlageranordnung nach Anspruch 3, dass zwei oder mehr axial hintereinander angeordnete Hülsen (7a, 7b, 7c) vorgesehen sind, die zur Bildung eines oder mehrerer Schmiermittelaufnahmeräume (30) voneinander beabstandet sind und/oder jeweils einen in der Wandstärke reduzierten Abschnitt aufweisen.

5. Planetenradlageranordnung nach Anspruch 4, **dadurch gekennzeichnet, dass** bei Anordnung der mehreren Hülsen (7, 7b, 7c) an der Lagerachse (6) die Lagerachse (6) eine Axialbohrung (13) und eine in diese geführte Radialbohrung (14), die in einem Schmiermittelaufnahmeraum (30) mündet, aufweist.

6. Planetenradlageranordnung nach einem der vorangehenden Ansprüche, **dadurch gekennzeichnet, dass** wenigstens ein Axialgleitlager (22) vorgesehen ist, über das das Planetenrad (5) gegen den Planetenradträger (4) gelagert ist, wobei das Axiallager (22) mindestens eine Axialscheibe (17) umfasst, die entweder mit dem Planetenrad (5) verbunden ist und auf dem Planetenradträger (4) läuft, oder die mit dem Planetenradträger (4) verbunden ist und auf dem Planetenrad (5) läuft, und die an ihrer zum Planetenradträger (4) oder zum Planetenrad (5) weisenden Seite eine zumindest abschnittsweise gewölbt profilierte Oberfläche (21) aufweist.

7. Planetenradlageranordnung nach Anspruch 6, **dadurch gekennzeichnet, dass** die Axialscheibe (17) eine Gleitschicht in Form einer abgeschiedenen Hartstoffschicht aufweist, die auf einer am Planetenradträger (4) oder am Planetenrad (5) ausgebildeten Gleitschicht in Form einer gehärteten Oberflächenschicht läuft.

8. Planetenradlageranordnung nach einem der Ansprüche 1 bis 5, **dadurch gekennzeichnet, dass** die Stirnseiten (24) des Planetenrads (5) selbst eine zumindest abschnittsweise gewölbte Oberfläche aufweisen.

9. Planetenradlageranordnung nach einem der vorangehenden Ansprüche, **dadurch gekennzeichnet, dass** die gewölbt profilierte Oberfläche (19, 21) eine homogene Wölbung ist, oder einen logarithmischen Verlauf aufweist.

10. Planetengetriebe, umfassend eine Planetenradlageranordnung nach einem der vorangehenden Ansprüche.

## Claims

1. Planetary gear bearing arrangement, comprising a planetary gear carrier, on which a fixed bearing pin is provided, on which a planetary gear is mounted rotatably via a plain bearing with a first sliding layer which is provided on the pin side and a second sliding layer which is provided on the gear side, **characterized in that** one of the two sliding layers (8, 11) is produced on a surface (10, 19) which is profiled in an arched manner exclusively in the edge regions of a sliding region.

2. Planetary gear bearing arrangement according to Claim 1, **characterized in that** one of the sliding layers is a deposited hard material layer (8) and the other sliding layer is a hardened surface layer (11).

3. Planetary gear bearing arrangement according to either of the preceding claims, **characterized in that** the profiled surface is configured directly on the bearing pin (6) or the planetary gear (5), or on at least one sleeve (7) which is arranged on the pin side or on the wheel side.

4. Planetary gear bearing arrangement according to Claim 3, in that two or more sleeves (7a, 7b, 7c) which are arranged axially behind one another are provided, which sleeves (7a, 7b, 7c) are spaced apart from one another in order to form one or more lubricant receiving spaces (30) and/or have in each case one section of reduced wall thickness.

5. Planetary gear bearing arrangement according to Claim 4, **characterized in that**, in the case of the arrangement of the plurality of sleeves (7, 7b, 7c) on the bearing pin (6), the bearing pin (6) has an axial bore (13) and a radial bore (14) which is guided into the latter and opens in a lubricant receiving space (30).

6. Planetary gear bearing arrangement according to one of the preceding claims, **characterized in that** at least one axial plain bearing (22) is provided, via which the planetary gear (5) is mounted against the planetary gear carrier (4), the axial bearing (22) comprising at least one axial disc (17) which is either connected to the planetary gear (5) and runs on the planetary gear carrier (4), or which is connected to the planetary gear carrier (4) and runs on the planetary gear (5), and which has a surface (21) which is profiled in a curved manner at least in sections on its side which points towards the planetary gear carrier (4) or towards the planetary gear (5) .

7. Planetary gear bearing arrangement according to Claim 6, **characterized in that** the axial disc (17) has a sliding layer in the form of a deposited hard material layer which runs on a sliding layer which is configured on the planetary gear carrier (4) or on the planetary gear (5) in the form of a hardened surface layer.

8. Planetary gear bearing arrangement according to one of Claims 1 to 5, **characterized in that** the end sides (24) of the planetary gear (5) itself have a surface which is curved at least in sections.

9. Planetary gear bearing arrangement according to one of the preceding claims, **characterized in that** the surface (19, 21) which is profiled in a curved manner is a homogeneous curvature, or has a logarithmic course.

10. Planetary transmission, comprising a planetary gear bearing arrangement according to one of the preceding claims.

## Revendications

1. Ensemble de palier de satellite, comprenant un porte-satellites, sur lequel il est prévu un axe de palier fixe, sur lequel un satellite est monté de façon rotative au moyen d'un palier lisse avec une première couche de glissement prévue côté axe et une seconde couche de glissement prévue côté roue, **caractérisé en ce qu'**une des deux couches de glissement (8, 11) est produite sur une surface profilée (10, 19) incurvée exclusivement dans les régions de bord d'une zone de glissement.

2. Ensemble de palier de satellite selon la revendication 1, **caractérisé en ce qu'**une des couches de glissement est une couche de matière dure déposée (8) et l'autre couche de glissement est une couche superficielle durcie (11).

3. Ensemble de palier de satellite selon l'une quelconque des revendications précédentes, **caractérisé en ce que** la surface profilée est formée directement sur l'axe de palier (6) ou sur le satellite (5), ou sur au moins une douille (7) disposée côté axe ou côté roue.

4. Ensemble de palier de satellite selon la revendication 3, en ce qu'il est prévu deux ou plusieurs douilles (7a, 7b, 7c) disposées axialement l'une derrière l'autre, qui sont espacées l'une de l'autre pour la formation d'une ou de plusieurs chambres de réception de lubrifiant (30) et/ou présentent chacune une partie d'épaisseur de paroi réduite.

5. Ensemble de palier de satellite selon la revendication 4, **caractérisé en ce que** lors de la pose des multiples douilles (7a, 7b, 7c) sur l'axe de palier (6) l'axe de palier (6) présente un alésage axial (13) et un alésage radial (14) mené dans celui-ci, qui débouche dans une chambre de réception de lubrifiant (30).

6. Ensemble de palier de satellite selon l'une quelconque des revendications précédentes, **caractérisé en ce qu'**il est prévu au moins un palier lisse axial (22), par lequel le satellite (5) est monté contre le porte-satellites (4), dans lequel le palier axial (22) présente au moins un disque axial (17), qui soit est assemblé au satellite (5) et glisse sur le porte-satellites (4), soit est assemblé au porte-satellites (4) et glisse sur le satellite (5), et qui présente sur son côté tourné vers le porte-satellites (4) ou vers le satellite (5) une surface profilée (21) au moins partiellement incurvée.

7. Ensemble de palier de satellite selon la revendication 6, **caractérisé en ce que** le disque axial (17) présente une couche de glissement sous la forme d'une couche de matière dure déposée, qui glisse sur une couche de glissement sous la forme d'une couche superficielle durcie formée sur le porte-satellites (4) ou sur le satellite (5).

8. Ensemble de palier de satellite selon l'une quelconque des revendications 1 à 5, **caractérisé en ce que** les côtés frontaux (24) du satellite (5) présentent eux-mêmes une surface au moins partiellement incurvée.

9. Ensemble de palier de satellite selon l'une quelconque des revendications précédentes, **caractérisé en ce que** la surface profilée incurvée (19, 21) est une courbure homogène, ou présente un tracé logarithmique.

10. Train épicycloïdal, comprenant un ensemble de palier de satellite selon l'une quelconque des revendications précédentes.
